# EUROPÄISCHE PATENTSCHRIFT

(11) **EP 0 618 096 B1**
(45) Veröffentlichungstag und Bekanntmachung des Hinweises auf die Patenterteilung: **21.08.1996**
(21) Anmeldenummer: 94103014.0
(22) Anmeldetag: 01.03.1994
(51) Int. Cl.: B60G 11/10, F16F 1/30, F16C 27/06

(54) **Gummilager für den Mittelzapfen einer Blattfederaufhängung in einem Kraftfahrzeug**
Rubber bearing for middle journal of leaf spring suspension in a motor vehicle
Palier de caoutchouc pour une pivot central d'une suspension du ressort à lames dans un véhicule automobile

(30) Priorität: 24.03.1993 DE 4309425
(43) Veröffentlichungstag der Anmeldung: 05.10.1994
(73) Patentinhaber: LEMFÖRDER METALLWAREN AG., D-49441 Lemförde (DE)
(72) Erfinder: Brokamp, Susanne, D-49401 Damme (DE); Siemer, Hubert, D-49413 Dinklage (DE)
(74) Vertreter: Bruse, Willy Hans Heinrich

(56) Entgegenhaltungen:
- EP-A- 0 506 053
- DE-A- 2 362 504
- DE-C- 3 903 350
- US-A- 3 276 395
- US-A- 4 671 678

## Beschreibung

Die Erfindung betrifft ein Gummilager für den Mittelzapfen einer Blattfederaufhängung in einem Kraftfahrzeug nach dem Oberbegriff des Patentanspruches 1.

In der Ausbildung als Lager für einen Stabilisator sind diese Ausbildungsmerkmale aus der DE-39 03 350 -C1- bekannt. Diese Druckschrift offenbart für ein geteiltes Lager eine Gummimetallbuchse, bei der der Gummikörper zwischen einer inneren Blechschale und einer äußeren Blechschale angeordnet ist, wobei die Blechschalen im vormontierten Zustand in der Teilungsebene einen peripheren Abstand voneinander aufweisen, der bei den beiden äußeren Halbschalen größer ist als bei den beiden inneren Halbschalen, so daß diese beim radialen Zusammenpressen der Gummimetallbuchse früher zur Anlage der sich gegenüberliegenden Stoßflächen gelangen, als die sich gegenüberliegenden Stoßflächen der beiden äußeren Halbschalen. Dadurch kann eine vorbestimmte Kennlinie der Steifigkeit der Gummihülse erreicht werden. Beide Halbschalen des Gummimetallteils werden durch eine auf den Innenmantel der beiden inneren Halbschalen aus Blech aufvulkanisierte Gummischicht zusammengehalten, die den einen Teilungsspalt überbrückt und lediglich an dem anderen Teilungsspalt offen ist.

Aus der DE-35 31 340 -C2- ist es bekannt, eine geteilte Gummihülse für ein Lager ähnlicher Ausbildung mit metallischen Einlagen zu versehen, welche ebenfalls als Halbschalen ausgebildet sind.

Die Aufgabe der Erfindung besteht darin, für ein Gummimetallager der eingangs genannten Bauart eine Gummimetallhülse in der Weise auszubilden, daß ihr Handling auf dem Wege von der Herstellung bis zur Montage und bei der Montage optimiert und ohne Funktionsbeeinträchtigung kostengünstiger konzeptioniert ist.

Die Lösung für diese Aufgabe besteht nach der Erfindung darin, daß ein die eingangs genannten Merkmale aufweisendes Gummilager mit Merkmalen nach dem Kennzeichen des Patentanspruches 1 ausgestattet wird.

Erreicht wird durch diese Ausbildungsmerkmale die Beibehaltung der an sich bekannten einstückigen Herstellung einer solchen Gummihülse, bei der die beiden Schalenhälften jedoch einen relativ stabilen Zusammenhang aufweisen. Dadurch wird einerseits die Verpackung der Gummihülse am Ort ihrer Herstellung, der häufig auf sehr langem Wege erfolgende Transport zum Montageort und schließlich auch die Montage des Gummilagers erleichtert. Die Verbindung der beiden Halbschalen an beiden Enden der Gummihülse gewährleistet bei der Montage eine genaue Positionierung der beiden Halbschalen zueinander und erleichtert das Einspannen der Halbschalen durch die Halbschalen des ebenfalls geteilten Gehäuses. Unterstützt wird eine solche Wirkung dadurch, daß die die beiden Halbschalen der Gummihülse miteinander verbindenden Stege geringfügig kürzer sind als die radiale Abmessung der im montierten Zustand ineinandergreifenden Nut-und-Feder-Ausbildung, so daß die beiden zusammenhängenden Halbschalen mit einer geringfügigen Dehnung der die Halbschalen verbindenden Stege axial auf den Zapfen aufgeschoben werden können, bis die Federausbildung in die Nutausbildung einschnappt. Es wird dadurch eine sichere Vorpositionierung der Gummihülse erreicht, so daß die Anbringung der Halbschalen des Gehäuses erleichtert wird.

Bei einem Gummilager gemäß der Erfindung können die Halbschalen der Gummimetallhülse in Anlehnung an die aus der DE-35 31 340 - C2- bekannten Anordnung halbschalenförmige metallische Einlagen aufweisen, wobei deren nach der Montage aneinanderliegende Stoßflächen im vormontierten Zustand gegenüber dem Werkstoff der Gummihülse vorspringen, um durch eine entsprechende Bemessung Einfluß auf die Steifigkeit der Gummihülse zu nehmen.

In der Zeichnung ist ein Ausführungsbeispiel der Erfindung dargestellt. Es Zeigen:

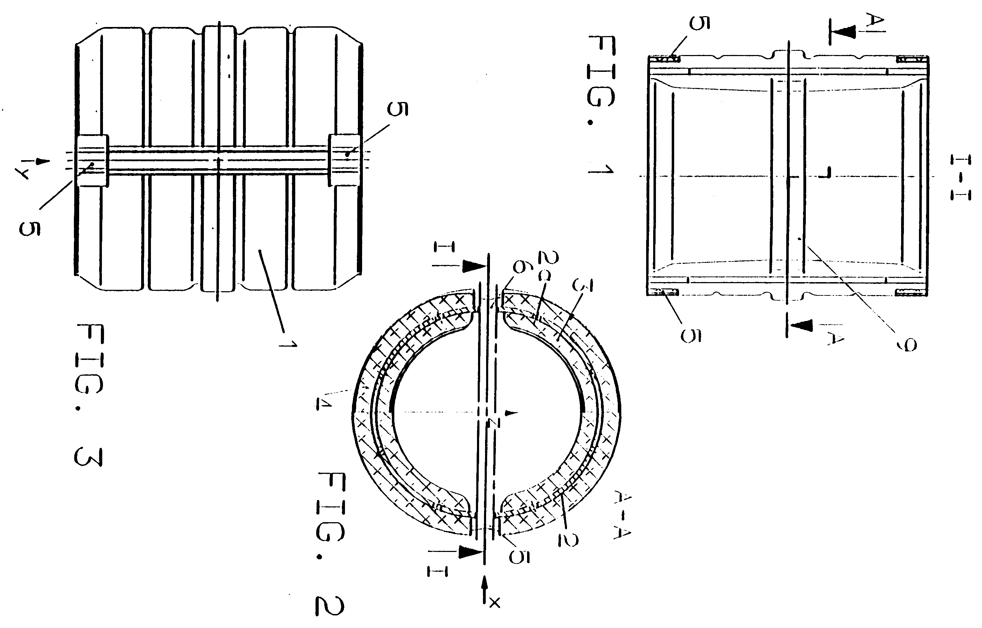

- Figur 1: einen Schnitt durch die Teilungsebene der Gummihülse nach der Linie I - I in Figur 2,
- Figur 2: einen Querschnitt nach der Linie A -A in Figur 1,
- Figur 3: eine Ansicht der Gummimetallhülse,
- Figuren 4 und 5: einen Querschnitt und einen Längsschnitt eines Gummilagers, jeweils zur Hälfte und
- Figur 6: eine perspektivische Darstellung der Gummihülse mit einem Längsschnitt in einer Achsebene.

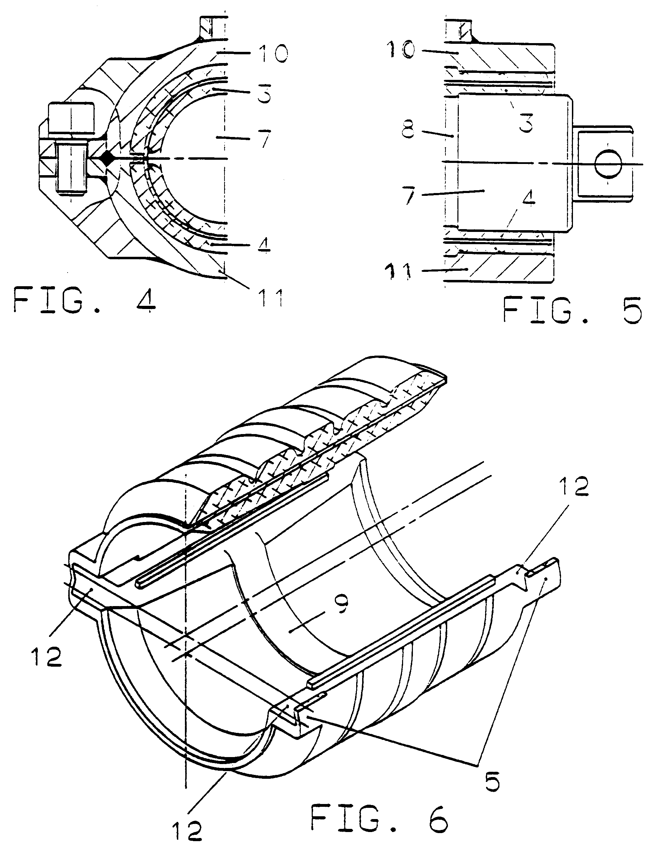

In den Zeichnungen ist eine Gummihülse 1 aus zwei Halbschalen 3 und 4 dargestellt, die jeweils eine Metalleinlage 2 aus Blech oder dergleichen aufweisen. Durch Öffnungen 2a der Metalleinlage 2 sind die außenliegende Schicht und die innenliegende Schicht des elastischen Werkstoffes miteinander verbunden. Die beiden Halbschalen 3 und 4 der Gummihülse 1 sind an ihren Enden durch flexible Stege 5 aus dem gleichen Werkstoff miteinander verbunden, so daß sich im vormontierten Zustand zwischen den beiden nach der Montage aneinanderliegenden Stoßflächen der beiden Halbschalen 3 und 4 ein Spalt 6 ergibt. Entsprechend der Darstellung in Figur 2 ragen die nach der Montage aneinanderliegenden Stoßflächen der Metalleinlagen 2 gegenüber dem elastischen Werkstoff vor, so daß sie beim radialen Zusammendrücken der Gummihülse 1 zuerst in eine gegenseitige Berührung gelangen, so daß in dem innerhalb der Metalleinlagen liegenden Werkstoff und dem außerhalb dieser Metalleinlagen liegenden Werkstoff eine unterschiedliche oder gleiche Vorspannung erzeugt werden kann. Auf dem Befestigungszapfen 7 ist etwa mittig im Gummilager eine umlaufende Zentriernut 8 angeordnet, in die eine am Innenmantel der beiden Halbschalen 3 und 4 ausgebildete Feder 9 eingreift. Die Länge der Stege 5 zwischen den beiden Halbschalen 3 und 4 und die radiale Abmessung der Zentriernut 8 bzw. der Feder 9 sind dabei so aufeinander abgestimmt, daß das axiale Aufschieben der Gummihülse 1 auf den Zapfen 7 durch ein radiales Aufweiten der Gummihülse 1 mit einer leichten Dehnung der Stege ermöglicht wird. Durch diese Vorspannung in den Stegen 5 wird die Gummihülse nach dem Aufschieben auf dem Zapfen 7 festgehalten, so daß die beiden Halbschalen 10 und 11 des Gehäuses montiert werden können. Bei dieser Montage erfolgt ein radiales Zusammendrücken der beiden Halbschalen 3 und 4, wobei sich zunächst die einander gegenüberliegenden Stoßflächen der Metalleinlagen 2 in den Halbschalen 3 und 4 berühren, bevor die einander gegenüberliegenden Stoßflächen der Halbschalen 10 und 11 des Gehäuses zur gegenseitigen Anlage kommen. Bei dieser radialen Verformung der Halbschalen 3 und 4 der Gummihülse 1 falten sich die Stege 5 entsprechend der Darstellung in den Figuren 4 und 6 nach innen und werden von Ausnehmungen 12 aufgenommen, die in der äußeren Schicht des elastomeren Werkstoffes der Gummihülse 1 vorgesehen sind. An der Außenseite der Gummihülse 1 sind Positionierungsnuten vorgesehen, in die die Halbschalen 10 und 11 des Gehäuses mit einem komplementären Profil eingreifen, um die Gummihülse 1 auch gegenüber den Halbschalen 10,11 des Gehäuses axial festzulegen. Zur Vermeidung einer Überbeanspruchung kann gegebenenfalls zugelassen sein, zwischen dem Innenmantel der Halbschalen 3 und 4 und dem Außenmantel des Zapfens 7 bzw. dem Außenmantel der Halbschalen 3 und 4 und dem Innenmantel der Halbschalen 10 und 11 des Gehäuses eine Gleitbewegung zuzulassen, so daß übermäßige Scherspannungen in dem Werkstoff der Gummihülse 1 vermieden werden.

### BEZUGSZEICHENLISTE:

- 1: Gummihülse
- 2: Metalleinlage
- 3: Halbschale
- 4: Halbschale
- 5: Steg
- 6: Spalt
- 7: Zapfen
- 8: Zentriernut
- 9: Feder
- 10: Halbschale des Gehäuses
- 11: Halbschale des Gehäuses
- 12: Ausnehmung

## Patentansprüche

1. Gummilager für den Mittelzapfen einer Blattfederaufhängung in einem Kraftfahrzeug, bestehend aus einem in einer Achsebene geteilten Gehäuse aus zwei Halbschalen und einer mit radialer Vorspannung auf dem Zapfen angeordneten Gummihülse aus zwei durch wenigstens eine radial ineinandergreifende Nut-und-Feder-Ausbildung axial auf dem Zapfen festgelegten Halbschalen, deren sich im montierten Zustand gegenüberliegende Stoßflächen im vormontierten Zustand peripher einen Abstand voneinander aufweisen, dadurch gekennzeichnet, daß die Halbschalen (3,4) der Gummihülse (1) an ihren Enden durch flexible Stege (5) in einem das axiale Aufschieben der radial aufgeweiteten Gummihülse (1) auf den Zapfen (7) ermöglichenden Abstand miteinander verbunden sind und Ausnehmungen (12) aufweisen, die die sich beim radialen Zusammendrücken einfaltenden Stege (5) aufnehmen.

2. Gummilager nach Anspruch 1, dadurch gekennzeichnet, daß die die Halbschalen (3,4) der Gummihülse (1) miteinander verbindenden Stege (5) geringfügig kürzer sind als die radiale Abmessung der im montierten Zustand ineinandergreifenden Nut- und-Feder-Ausbildung (8,9).

3. Gummilager nach den Ansprüchen 1 und 2, dadurch gekennzeichnet, daß die Halbschalen (3,4) der Gummihülse (1) jeweils eine Metalleinlage (2) aufweisen, deren nach der Montage aneinanderliegende Stoßflächen im vormontierten Zustand gegenüber dem Werkstoff der Gummihülse (1) vorspringen.

## Claims

1. Rubber bearing for the central pin of a leaf spring suspension means in a motor vehicle, consisting of a housing which is divided in an axial plane and consists of two half shells and a rubber sleeve arranged with radial bias on the pin and consisting of two half shells which are fixed axially on the pin by at least one radially engaging groove and spring construction and of which the abutting surfaces which oppose one another in the assembled state are peripherally spaced from one another in the pre-assembled state, characterized in that the half shells (3, 4) of the rubber sleeve (1) are connected to one another at their ends by flexible webs (5) with spacing permitting the radially enlarged rubber sleeve (1) to be pushed axially onto the pin (7) and have recesses (12) receiving the webs (5) which fold in under radial compression.

2. Rubber bearing according to claim 1, characterized in that the webs (5) which connect the half shells (3, 4) of the rubber sleeve (1) to one another are slightly shorter than the radial dimension of the groove and spring construction (8, 9) engaging in the assembled state.

3. Rubber bearing according to claims 1 and 2, characterized in that the half shells (3, 4) of the rubber sleeve (1) each have a metal inlay (2) of which the abutting surfaces which rest on one another after assembly project relative to the material of the rubber sleeve (1) in the pre-assembled state.

## Revendications

1. Palier en caoutchouc pour le pivot central d'une suspension d'un ressort à lames dans un véhicule automobile, composé d'un boîtier divisé dans un plan axial en deux demi-coquilles, et d'un manchon en caoutchouc installé sous une précontrainte radiale sur le pivot, constitué de deux demi-coquilles arrêtées axialement sur le pivot par l'intermédiaire d'au moins un système à lanquette et rainure s'emboîtant radialement l'une dans l'autre, dont les faces de joint qui, à l'état assemblé, se situent en face l'une de l'autre, présentent, à l'état pré-assemblé, une distance périphérique l'une par rapport à l'autre,
caractérisé en ce que les demi-coquilles (3, 4) du manchon (1) en caoutchouc sont reliées l'une à l'autre, par leurs extrémités, par l'intermédiaire de pattes flexibles (5), à une distance l'une de l'autre qui permet l'emmanchement axial du manchon (1) en caoutchouc radialement dilaté sur le pivot (7), et en ce qu'elles comportent des évidements (12) qui reçoivent les pattes (5) plissées lors de la compression radiale.

2. Palier en caoutchouc selon la revendication 1, caractérisé en ce que les pattes (5), reliant les demi-coquilles (3, 4) du manchon (1) en caoutchouc l'une à l'autre, sont légèrement plus courtes que la dimension radiale du système à rainure et languette (8, 9) emboîtées l'une dans l'autre à l'état assemblé.

3. Palier en caoutchouc selon les revendications 1 et 2, caractérisé en ce que les demi-coquilles (3, 4) du manchon (1) en caoutchouc comportent chacune une âme métallique (2), dont les faces de joint qui, après exécution du montage, sont en contact mutuel bout-à-bout, font saillie par rapport à la matière du manchon (1) en caoutchouc, à l'état pré-assemblé.
